(19) Europäisches Patentamt
European Patent Office
Office européen des brevets

(11) EP 2 537 868 B1

(12) EUROPEAN PATENT SPECIFICATION

(45) Date of publication and mention of the grant of the patent:
**10.08.2016 Bulletin 2016/32**

(51) Int Cl.:
***C08F 10/06*** *(2006.01)* ***C08K 5/00*** *(2006.01)*

(21) Application number: **11170799.8**

(22) Date of filing: **21.06.2011**

(54) **Process for the manufacture of alpha-nucleated polypropylene**

Verfahren zur Herstellung von alpha-nucleiertem Polypropylen

Procédé de fabrication de polypropylène alpha-nucléé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.12.2012 Bulletin 2012/52**

(73) Proprietor: **Borealis AG**
**1220 Vienna (AT)**

(72) Inventors:
- **Knall, Astrid-Caroline**
  **8055 Graz (AT)**
- **Sandholzer, Martina**
  **4030 Linz (AT)**
- **Potter, Gregory**
  **4020 Linz (AT)**
- **Eckmayr, Renate**
  **4030 Linz (AT)**
- **Kheirandish, Saeid**
  **41468 Neuss (DE)**

(74) Representative: **Lux, Berthold**
**Maiwald Patentanwalts GmbH**
**Elisenhof**
**Elisenstraße 3**
**80335 München (DE)**

(56) References cited:
**EP-A1- 2 202 271**
**WO-A1-00/68315**
**WO-A1-2010/049371**
**WO-A1-2011/032861**
**WO-A1-2011/089133**
**WO-A2-2004/072168**
**US-A- 5 244 948**
**US-A1- 2004 138 057**
**US-A1- 2010 301 525**
**US-B1- 6 271 166**

- **BERNLAND K ET AL: "Phase behavior and optical- and mechanical properties of the binary system isotactic polypropylene and the nucleating/clarifying agent 1,2,3-trideoxy-4,6:5,7-bis-O-[(4-propylphe nyl) methylene]-nonitol", POLYMER, ELSEVIER SCIENCE PUBLISHERS B.V, GB, vol. 50, no. 11, 22 May 2009 (2009-05-22), pages 2460-2464, XP026116288, ISSN: 0032-3861, DOI: 10.1016/J.POLYMER.2009.03.010 [retrieved on 2009-03-18]**
- **SCHMIDT H-W: "Efficient nucleating agents and clarifiers for isotactic polypropylene", PROCEEDINGS OF THE 5TH EUROPEAN CONFERENCE ON ADDITIVES & COLORS : 14 20070314; 20070314 - 20070315 ANTWERPEN : SOC. OF PLASTICS ENGINEERS EUROPE, BE, 14 March 2007 (2007-03-14), pages 1-8, XP008144589,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 537 868 B1

## Description

The present invention is direct to a new process for the manufacture of an α-nucleated polypropylene as well as to α-nucleated polypropylenes with low α-nucleating agent content. It is well known in the field of polypropylene that due to the additivation of such polymers the mechanical properties can be improved.

EP 2 202 271 discloses a heterophasic polymer composition, comprising (iii) a polymeric alpha-nucleating agent which comprises monomer units derived from a vinyl compound.

For instance it is well known that benzene phosphate derivatives trigger α-nucleation in polypropylene material. High amount of α-phase within the polypropylene material is decisive for good optical properties. On the other hand additives are an important cost factor. There is always the desire to reduce costs without losing the desired properties obtained by the employed additives. Costs are in particular an critical issue in a high-volume, small margin business.

Accordingly the object of the present invention is to reduce the amount of α-nucleating agents in the polypropylene, without compromising the optical properties of said material. The finding of the present invention is to feed during polymerization of the polypropylene the α-nucleating agent, i.e. to feed the α-nucleating agent into the polymerization vessel. Another finding of the present invention is that this approach is insufficient when employing phosphorous-based α-nucleating agents.

Accordingly the present invention is directed to a process for the preparation of an α-nucleated polypropylene comprising the steps of

(a) adding an α-nucleating agent into a reactor system,
(b) polymerizing in said reactor system in the presence of a catalyst system propylene and optionally ethylene and/or $C_4$ to $C_{12}$ α-olefins obtaining thereby a polypropylene comprising said α-nucleating agent,
(c) discharging said polypropylene from the reactor system, and
(d) extruding said polypropylene obtaining thereby the α-nucleated polypropylene, wherein
the α-nucleating agent is selected from the group consisting of benzene amid derivatives, sorbitol derivatives, nonitol derivatives and mixtures thereof.

It has surprisingly been found that with this specific feeding regime the amount of α-nucleating agent can be significantly reduced without compromising the optical properties (see example section).

In the following the invention will be described in more detail.

As mentioned above one essential aspect is that the α-nucleating agent is not added during the extrusion to the polypropylene but during its preparation. Preferably the α-nucleating agent is added into the reactor system in amount to obtain an α-nucleated polypropylene comprising the α-nucleating agent in an amount of below 125 ppm, more preferably of below 110 ppm, still more preferably below 105 ppm, yet more preferably in the range of 20 to below 125 ppm, still yet more preferably in the range of 40 to 110 ppm, like in the range of 45 to 105.

Thus it is appreciated that the ratio between the absolute amount of α-nucleating agent added during the polymerization and the absolute amount of catalyst used for the polymerization is in the range of from 1.2 to 15, preferably in the range of from 2.0 to 12, more preferably in the range of from 2.5 to 10.

The α-nucleating agent is added (fed) into the reactor system during or prior to the polymerization of the polypropylene. According to one embodiment, the α-nucleating agent is added (fed) together with the catalyst system, preferably with a catalyst system comprising a procatalyst, a cocatalyst and optionally an external donor, into the reactor system. More specifically the α-nucleating agent is prior to its feed (step (a)) mixed with at least one component of the catalyst system. Preferably for this embodiment the α-nucleating agent is mixed first with the cocatalyst and subsequently with the remaining parts of the catalyst system.

As mentioned above the polymerization in step (b) is preferably accomplished by using a catalyst system. Any suitable catalyst system for the preparation of a polypropylene can be used. Preferably the catalyst system is a metallocene catalyst system or a Ziegler-Natta catalyst system. It is in particular preferred that the catalyst system comprises a cocatalyst. Such a cocatalyst preferably comprises an element of group 13 of the periodic table (IUPAC), more preferably comprises a compound of A1.

One finding of the present invention is that not every α-nucleating agent can be used for this process. For instance feeding phosphate-based α-nucleating agents into the reactor system leads obviously to the poisoning of the catalyst system and thus to very low yields. Similarly negative effects can be expected for other α-nucleating agents involving a carboxylic acid ester group or being a salt of a carboxylic acid. Accordingly the α-nucleating agent must be selected from the group of non-hydrolysable α-nucleating agents like sorbitol derivatives, nonitol derivatives, benzene-trisamides and mixtures thereof.

Therefore, it is in particular preferred that no phosphate-based α-nucleating agents are added during the polymerization. It is especially preferred that during the polymerization (step (b)) no other α-nucleating agents are added to those listed above. However it is possible to add further α-nucleating agents during step (d) to the polypropylene. In

one preferred embodiment no phosphate-based α-nucleating agent is added during the overall process. It is especially preferred that during the overall process only the α-nucleating agents are added as listed above. In one preferred embodiment only a benzene amid derivative, like the one of formula (III), or a sorbitol or nonitol derivative, like the one of formula (V), is added.

According to one preferred embodiment, the α-nucleating agent is of formula (III)

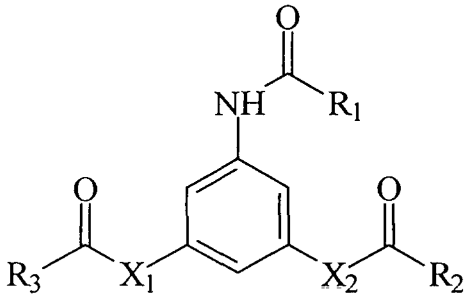

(III)

wherein

$X_1$ and $X_2$ are independently from each other a direct bond, NH or $CR_4R_5$, wherein $R_4$ and $R_5$ are independently from each other selected from the group consisting of H, $CH_3$, $CH_2CH_3$, $CH(CH_3)_2$, and $CH_2CH_2CH_3$,
$R_1$, $R_2$ and $R_3$ are independently from each other $CH_3$, $CH_2CH_3$, $CH(CH_3)_2$, $CH_2CH_2CH_3$, $C(CH_3)_3$, and $CH_2CH(CH_3)CH_3$.

It is in particular preferred that $X_1$ and $X_2$ are identical. In one preferred embodiment $X_1$ and $X_2$ are NH.

Preferably at least one $R_1$, $R_2$ and $R_3$ is $C(CH_3)_3$. More preferably $R_1$, $R_2$ and $R_3$ are the same. It is especially preferred that $R_1$, $R_2$ and $R_3$ are $C(CH_3)_3$.

In one specific embodiment $X_1$ and $X_2$ are NH and $R_1$, $R_2$ and $R_3$ are $C(CH_3)_3$.

A listing of especially preferred α-nucleating agents of this class can be found in Abraham et al. Macromol.Chem.Phys. 211 (2010) 171-181. The most preferred substance of this class is 1,3,5-tris(2,2-dimethyl propanamido)benzene, CAS No. 745070-61-5.

According to another preferred embodiment, the α-nucleating agent is of formula (V)

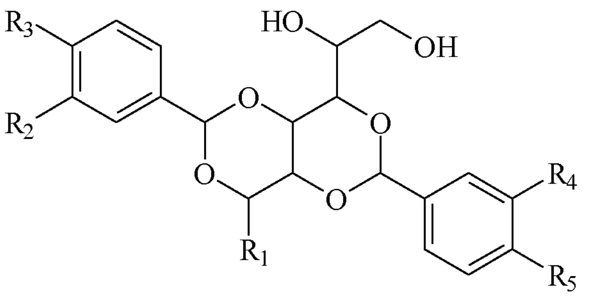

(V)

wherein

$R_1$ is H, $CH_3$ or $(CH_2)_nCH_3$ with n = 1 to 4
$R_2$, $R_3$, $R_4$ and $R_5$ are independently from each other selected from H, $CH_3$, $C_2H_5$, $CH(CH_3)_2$ or $C(CH_3)_3$

A listing of especially preferred α-nucleating agents of this class can be found in Table 1 of Gahleitner et al. Intern.Polym.Proc. XXVI (2011) 2-20. The most preferred substance of this class is 1,2,3-trideoxy-4,6:5,7-bis-O[(4-propylphenyl)methylene]-nonitol, CAS No. 882073-43-0.

Specific primary antioxidants not comprising an carboxylic acid ester group can also be added in the polymerization parallel to the α-nucleating agent in a suitable amount. "Primary antioxidant" in this context means chain-breaking donors or chain-breaking acceptors as defined in the literature (Zweifel, H. Ed.) Plastics Additives Handbook, 5th Edition, Hanser, Munich 2001, pages 9-15). One specifically advantageous group of primary antioxidants in the form of chain-breaking donors are substances comprising a sterically hindered OH-group. Accordingly in one embodiment the primary antioxidant is a phenol derivative not comprising carboxylic acid ester group, more preferably a sterically hindered phenol

derivative not comprising carboxylic acid ester group. "Sterically hindered" according to this invention means that at least in one ortho-position to the hydroxy group an alkyl group like a methyl group, an isopropyl group, a tert-butyl group or the like is located. Typical examples are 3,5-di-tert-butyl-4-hydroxytoluene (CAS No. 128-37-0), 2,2'-Ethylidenebis (4,6-di-tert. butylphenol) (CAS No. 35958-30-6) or racemic α-tocopherol (vitamin E, DL-form, CAS No. 2074-35-5).

One preferred catalyst system used in the present invention is a Ziegler-Natta catalyst system comprising

(i) procatalyst,
(ii) a cocatalyst, and
(iii) optionally an external donor.

Preferably the procatalyst contains phthalic ester, a diether or a succinic acid derivative as internal donor component.

According to one embodiment, the procatalyst is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

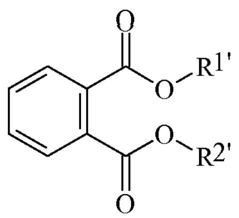

(I)

wherein $R^{1'}$ and $R^2$ are independently at least a $C_5$ alkyl
under conditions where a transesterification between said $C_1$ to $C_2$ alcohol and said dialkylphthalate of formula (I) takes place to form the internal donor

c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanized carrier, followed by the steps of

- adding to said titanised carrier

  (i) a dialkylphthalate of formula (I) with $R^1$ and $R^2$ being independently at least a $C_5$-alkyl, like at least a $C_8$-alkyl, or preferably
  (ii) a dialkylphthalate of formula (I) with $R^1$ and $R^2$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

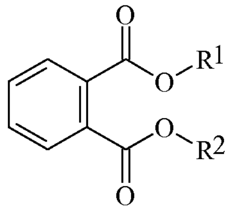

(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to this invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to this invention has been produced by using ethanol as the alcohol and dioctylphthalate (DOP) as dialkylphthalate of formula (I), yielding diethyl phthalate (DEP) as the internal donor compound.

Still more preferably the catalyst used according to this invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.

The cocatalyst is preferably selected from the group consisting of trialkylaluminium, like triethylaluminium (TEA), dialkyl aluminium chloride and alkyl aluminium sesquichloride. Triethylaluminium (TEA) is especially preferred as cocatalyst.

Preferred external donors are represented by formula (IVa) or (IVb). Formula (IVa) is defined by

$$Si(OCH_3)_2R_2^5 \qquad (IVa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.
Formula (IVb) is defined by

$$Si(OCH_2CH_3)_3(NR^xR^y) \qquad (IVb)$$

wherein $R^x$ and $R^y$ can be the same or different and represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor of formula (IVb) is diethylaminotriethoxysilane.

Most preferably the external donor is of formula (IVa), like dicyclopentyl dimethoxy silane [$Si(OCH_3)_2$(cyclopentyl)$_2$] or diisopropyl dimethoxy silane [$Si(OCH_3)_2(CH(CH_3)_2)_2$].

According to one embodiment, the α-nucleating agent is first mixed with the cocatalyst and subsequently said obtained mixture is further mixed with the procatalyst. Finally the external donor - if used - is added. Accordingly the α-nucleating agent is added into the reactor system together with the catalyst system.

Further, as mentioned above the polymerization takes place in a reactor system.

The term "reactor system" indicates that the polypropylene can be produced in one or more reactors, like one, two, three or more reactors. Preferably the polymerization in step (b), i.e. the polymerization of the polypropylene is accomplished in one or two reactors. The term "reactor system" shall indicate that the main polymerization takes place in this system. Thus in case the process consists of one or two polymerization reactors, this definition does not exclude the option that the overall process comprises for instance a pre-polymerization step in a pre-polymerization reactor. The term "consist of" is only a closing formulation in view of the main polymerization reactors, i.e. where the polymerization of the polypropylene takes place.

The first reactor is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

The following reactor(s), in particular the second reactor, - if present - are preferably gas phase reactors. Such gas phase reactors can be any mechanically mixed or fluid bed reactors. Preferably the gas phase reactors comprise a mechanically agitated fluid bed reactor with gas velocities of at least 0.2 m/sec. Thus it is appreciated that the gas phase reactor is a fluidized bed type reactor preferably with a mechanical stirrer.

Thus in one preferred embodiment the first reactor is a slurry reactor, like a loop reactor, whereas the second reactor and any optional subsequent reactor are gas phase reactors. Accordingly in one embodiment a slurry reactor, like a loop reactor and a gas phase reactor connected in series are used. If needed prior to the slurry reactor a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the polypropylene the conditions for the first reactor, i.e. the slurry reactor (SR), like a loop reactor (LR), may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture is transferred to the second reactor, i.e. gas phase reactor, whereby the conditions in this reactor are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in any subsequent reactor is similar to the second reactor.

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor, i.e. in the slurry reactor, like in the loop reactor, and/or as a condensed mode in the gas phase reactors.

If the reactor system as described above comprises more than one reactor the $\alpha$-nucleating agent can be added into any one of the reactors. However it is in particular preferred that it is added to the first or second reactor of the reactor system. In one preferred embodiment the $\alpha$-nucleating agent is added to the first reactor, i.e. the the slurry reactor, like in the loop reactor. The $\alpha$-nucleating agent can be first mixed with the catalyst system prior to feeding the same into the reactor system, more preferably into the first reactor, i.e. the slurry reactor, like in the loop reactor.

The process may also comprise a prepolymerization with the catalyst system.

The prepolymerization is preferably conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction

mixture in liquid phase. Thus, the pressure may be from 20 to 100 bar, for example 30 to 70 bar.

The catalyst components are preferably all introduced to the prepolymerization step. However, where the catalyst components can be fed separately it is also possible that for instance only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

The α-nucleating agent can also be present in the prepolymerization. However, it is also possible to add α-nucleating agent only in the reactor system.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

After the polymerization (step (b)) the obtained polypropylene comprises the α-nucleating agent. Subsequently said polypropylene is discharged from the reactor system. Preferably the polypropylene is purified according to standard procedures for catalytic polymerization. In any case after the polymerization the polypropylene comprising the α-nucleating agent is (melt) extruded, preferably (melt) extruded to pellets or directly formed into articles. For the extrusion any known extruder can be used, like a (twin) screw extruder.

Only after the extrusion of the polypropylene comprising the α-nucleating agent the nucleating effect can be observed. Accordingly only the polypropylene, which has been extruded, is regarded as the α-nucleated polypropylene according to this invention. Thus the polypropylene prior to the extrusion step (d) is not regarded as "nucleated", even though it comprises already the α-nucleating agent.

During the extrusion the polypropylene can be further additivated. Typical additives are antioxidants. It has been observed that especially good results can be obtained if phosphorous based secondary antioxidants are added, like tris (2,4-di-*t*-butylphenyl) phosphite. Of course also other antioxidants can be additionally added, for example primary antioxidants like pentaerythrityl-tetrakis(3-(3',5'-di-tert. butyl-4-hydroxyphenyl)-propionate. It is further preferred to also add acid scavengers like calcium stearate in this step.

In principle at this stage also further α-nucleating agents can be added. However it is in particular preferred that only during the polymerization of the polypropylene α-nucleating agents are added.

In the following the obtained α-nucleated polypropylene is defined in more detail.

The α-nucleated polypropylene, especially the α-nucleated random propylene copolymer as defined in detail below, obtainable, preferably obtained, by the instant process has preferably

(a) a melting temperature Tm of at least 140 °C, more preferably in the range of 140 to 164°C, yet more preferably in the range of 145 to 162 °C, and/or
(b) a crystallization temperature Tc in the range of 107 to 118 °C, measured by differential scanning calorimetry (DSC).

Further it is appreciated that the xylene soluble content of the α-nucleated polypropylene, especially of the α-nucleated random propylene copolymer as defined in detail below, is a rather low. Accordingly the α-nucleated polypropylene, especially the α-nucleated random propylene copolymer as defined in detail below, has preferably a xylene cold soluble fraction (XCS) measured according to ISO 6427 (23 °C) of not more than 12.0 wt-%, more preferably of not more than 9.0 wt.-%. Thus a preferred range is 1.0 to 12.0 wt.-%, more preferred 1.2 to 9.0 wt.-%.

Additionally the α-nucleated polypropylene, especially the α-nucleated random propylene copolymer as defined in detail below, has a melt flow rate $MFR_2$ (230 °C) measured according to ISO 1133 in a broad range, i.e. in the range of 1.8 to 200.0 g/10min, more preferably in the range of 2.0 to 150.0 g/10min, yet more preferably in the range of 10.0 to 100.0 g/10min, still yet more preferably in the range of 12.0 to 75.0 g/10min.

Further it is appreciated α-nucleated polypropylene, especially the α-nucleated random propylene copolymer as defined in detail below, comprises the α-nucleating agent in an amount of below 125 ppm, more preferably of below 110 ppm, still more preferably below 105 ppm, yet more preferably in the range of 20 to below 125 ppm, still yet more preferably in the range of 40 to 110 ppm, like in the range of 45 to 105 ppm.

Additionally the α-nucleated polypropylene is not only featured by a low α-nucleating agent but also by good optical properties. Thus it is appreciated that the α-nucleated polypropylene, especially the α-nucleated random propylene copolymer as defined in detail below, has a haze of below 30 %, more preferably of below 25 %, still more preferably below 20 %, yet more preferably in the range of 5 to 25 %, like 10 to 20 %, measured on a 60x60x1 $mm^3$ injection molded sample according to ASTM D 1003-07.

The α-nucleated polypropylene obtained in the instant process can be an α-nucleated propylene homopolymer or a α-nucleated propylene copolymer. Also heterophasic systems, like an α-nucleated heterophasic propylene copolymer can be produced.

The expression homopolymer used in the instant invention relates to a polypropylene that consists of at least

99.5 wt.-%, more preferably of at least 99.8 wt.-%, of propylene units. In a preferred embodiment only propylene units in the propylene homopolymer are detectable.

It is especially preferred that the α-nucleated polypropylene is a α-nucleated random propylene copolymer. Thus in the following the properties of a preferred α-nucleated random propylene copolymer including the α-nucleating agent (and optional additives) are defined in more detail.

The α-nucleated random propylene copolymer comprises monomers copolymerizable with propylene, for example comonomers such as ethylene and/or $C_4$ to $C_{12}$ α-olefins, in particular ethylene and/or $C_4$ to $C_{10}$ α-olefins, e.g. 1-butene and/or 1-hexene. Preferably the α-nucleated random propylene copolymer comprises, especially consist of, monomers copolymerizable with propylene from the group consisting of ethylene, 1-butene and 1-hexene. More specifically the α-nucleated random propylene copolymer comprises - apart from propylene - units derivable from ethylene and/or 1-butene. In a preferred embodiment the α-nucleated random propylene copolymer comprises units derivable from ethylene and propylene only. The comonomer content in the α-nucleated random propylene copolymer is preferably relatively low, i.e. from 0.5 to 10.0 wt.-%, more preferably 0.8 to 8.0 wt.-%, yet more preferably 1.0 to 6.0 wt.-%.

The term random propylene copolymer according to this invention covers also copolymers which comprises at least two fractions, preferably consists of two fractions, which differ in the comonomer content. Accordingly in one embodiment the propylene copolymer comprises a comonomer lean polymer fraction and one comonomer rich polymer fraction. Thus in one specific embodiment the propylene copolymer comprises, preferably consists of, a propylene homopolymer fraction and a propylene copolymer fraction. Concerning the comonomer types it referred to the information provided for the random propylene copolymer. Typically the propylene copolymer fraction has a comonomer content of 0.5 to 15.0 wt.-%, more preferably 0.8 to 10.0 wt.-%, yet more preferably 1.0 to 8.0 wt.-%. The weight ratio between the comonomer lean polymer fraction, i.e. the propylene homopolymer, and the comonomer rich polymer fraction is 60:40 to 40:60. Preferably such random propylene copolymers are produced in a multistage process as mentioned above.

The term random is understood according to IUPAC (Glossary of basic terms in polymer science; IUPAC recommendations 1996). Accordingly it is preferred that the α-nucleated random propylene copolymer has a randomness of at least 40 %, more preferably of at least 50 %, yet more preferably at least 55 %, even more preferably of at least 60 %, and still more preferably of at least 65 %.

The present invention is not only directed to the manufacture of the α-nucleated polypropylene but also to the α-nucleated polypropylene obtainable, preferably obtained by the process. Accordingly the invention is in particular directed to a α-nucleated polypropylene, preferably to a α-nucleated random propylene copolymer, comprising a α-nucleating agent selected from the group consisting of benzene amid, like benzene-trisamide, derivatives, sorbitol derivatives, nonitol derivatives and mixtures thereof, wherein the amount of α-nucleating agent is in the range of 20 to below 125 ppm. Preferably the α-nucleating agent is of formula III. In an especially preferred embodiment the α-nucleated polypropylene, preferably the α-nucleated random propylene copolymer, comprises as the only α-nucleating agent the α-nucleating agent of formula III, even more preferred 1,3,5-tris(2,2-dimethyl propanamido)benzene (α-nucleating agent of formula III with $X_1$ and $X_2$ are NH and $R_1$, $R_2$ and $R_3$ are $C(CH_3)_3$; formula (IIIa)).

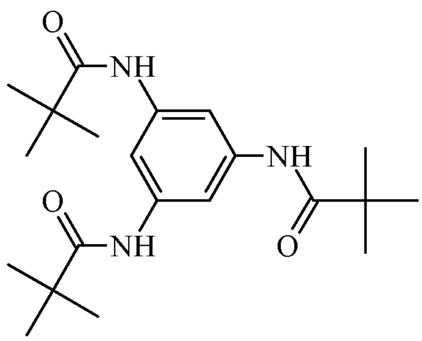

(IIIa)

The α-nucleated polypropylene, preferably the α-nucleated random propylene copolymer, has further preferably a haze of below 30 %, more preferably of below 25 %, still more preferably below 20 %, yet more preferably in the range of 5 to 25 %, like 10 to 20 %, measured on a 60x60x1 $mm^3$ sample according to ASTM D 1003-07.

Concerning the other preferred characteristics of the α-nucleated polypropylene, preferably of the α-nucleated random propylene copolymer, reference is made to the information provided above, when discussing the process of the instant invention.

In the following, the present invention is described by way of examples.

## A. Measuring methods

The following definitions of terms and determination methods apply for the above general description of the invention as well as to the below examples unless otherwise defined. **Quantitative determination of additives,** in particular of α-nucleating agents, within the α-nucleated polypropylene:

Measuring principles

The quantitative analysis was done by high-pressure liquid chromatograpy (HPLC).
For the linearity-check of the calibration, a six-point calibration was set up. Three measurements (injections) of each level were evaluated. The detection wave length in this test was set to 225 nm. Tinuvin 120 (2,4-di-*t*-butylphenyl-3,5-di-*t*-butyl-4-hydroxybenzoate which is used as an internal standard for the polymer sample analysis) and Irgaclear XT 386 (N-[3,5-bis-(2,2-dimethyl-propionylamino)-phenyl]-2,2-dimethyl-propionamide) were used for the calibration.

Sample preparation

The internal standard solution (ISTD) was prepared with 16.67 mg Tinuvin 120 in a 250 ml flask. The flask was filled with THF/MeOH=7/3. The parent solution contained 17.16 mg of Irgaclear XT 386 that were put into a 100 ml flask and diluted in ISTD. The parent solution was equivalent to calibration level 1. The other calibration levels were prepared with the level 1-solution and the ISTD, including dilutions of 1:1 (level 2), 1:5 (level 3), 1:10 (level 4), 1:25 (level 5), and 1:50 (level 6).

**Table 1:** Calibration levels of Irgaclear XT 386 (Tinuvin 120 = ISTD)

| Calibration level | *x*XT386 | *x*Tin120 | *A*XT386 | *A*Tin120 | Area ratio | Amount ratio |
|---|---|---|---|---|---|---|
| | mg $l^{-1}$ | mg $l^{-1}$ | | | | |
| Level 6 | 3.43 | 66.68 | 193.65 | 1760.68 | 0.11 | 0.05 |
| Level 5 | 6.86 | 66.68 | 374.42 | 1771.87 | 0.21 | 0.10 |
| Level 4 | 17.16 | 66.68 | 930.70 | 1766.65 | 0.53 | 0.26 |
| Level 3 | 34.32 | 66.68 | 1794.23 | 1769.62 | 1.01 | 0.51 |
| Level 2 | 85.80 | 66.68 | 4572.85 | 1742.81 | 2.62 | 1.29 |
| Level 1 | 171.60 | 66.68 | 9298.21 | 1769.64 | 5.25 | 2.57 |

Table 1 shows the amounts and the area values of Irgaclear XT 386 and Tinuvin 120 at each calibration level. The calibration graph that is shown in figure 1, plots area ratio (*A*XT386/*A*Tin120) vs. amount ratio (*x*XT386/*x*Tin120) and is going to be used for the quantification of Irgaclear XT 386 from sample extracts.

The linear regression was calculated by the Chemstation software with the settings:

Curve Type: Linear
Origin: Included
Weight: Equal
Recovery

Additionally, the recovery rates of all calibration levels (amount ratios) were evaluated. For this purpose the amount ratio was recalculated with the formula

$$\left(\frac{A_X}{A_{ISTD}} - b\right)\frac{1}{m} = \frac{C_X}{C_{ISTD}}$$

and compared with the amount ratio of weighed-in quantities.

**Table 2:** Recovery of each calibration level

| Amount ratio | Amount ratio calc. | Recovery / % |
|---|---|---|
| 0.05 | 0.06 | 109.11 |
| 0.10 | 0.11 | 102.77 |
| 0.26 | 0.26 | 101.16 |
| 0.51 | 0.50 | 96.93 |
| 1.29 | 1.29 | 100.05 |
| 2.57 | 2.58 | 100.09 |

The average recovery rate of all six calibration levels based on amount ratios was found to be 101.69%.

**Comonomer content,** especially ethylene content is measured with Fourier transform infrared spectroscopy (FTIR) calibrated with $^{13}$C-NMR. When measuring the ethylene content in polypropylene, a thin film of the sample (thickness about 250 μm) was prepared by hot-pressing. The area of absorption peaks 720 and 733 $cm^{-1}$ for propylene-ethylene-copolymers was measured with Perkin Elmer FTIR 1600 spectrometer. Propylene-1-butene-copolymers were evaluated at 767 $cm^{-1}$. The method was calibrated by ethylene content data measured by $^{13}$C-NMR. See also "IR-Spektroskopie für Anwender"; WILEY-VCH, 1997 and "Validierung in der Analytik", WILEY-VCH, 1997

**$MFR_2$ (230 °C)** is measured according to ISO 1133 (230 °C, 2.16 kg load).

**The xylene solubles (XCS, wt.-%):** Content of xylene cold solubles (XCS) is determined at 25 °C according ISO 16152; first edition; 2005-07-01

**Melting temperature ($T_m$) and heat of fusion ($H_f$), crystallization temperature ($T_c$) and heat of crystallization ($H_c$):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** ($H_c$) are determined from the cooling step, while melting temperature and **heat of fusion** ($H_f$) are determined from the second heating step

**Haze** was determined according to ASTM D 1003-07on 60x60x1 $mm^3$ and 60x60x2 $mm^3$ plaques injection molded in line with EN ISO 1873-2 using a melt temperature of 200°C, respectively.

## Examples

### 1. Polymerizations

The stabilizing and clarifying agents were added in-situ by dissolving or suspending them in a TEAL solution at the desired final ppm level (intended concentration was 75 ppm for XT386; resp 135 ppm for NA-11). This mixture was then added to dicyclo pentyl dimethoxy silane as external donor for a contact time of 5 minutes. The catalyst was then added to the resulting mixture for an additional contact time of 5 minutes. The final mixture was then added to the reactor for the polymerization.

The polymers are random polypropylenes (< 10 wt.-% $C_2$) produced in the bulk phase. The reactor was filled with ~5500 g of propylene, 80 L of hydrogen and 32 g of ethylene while the reactor was heated up to the desired temperature. During the reaction, a constant flow of ethylene was fed into the reactor at a rate of 1.8 g/minute for 60 minutes and then the reactor was quenched.

**Table 3:** Polymerization results

| Sample | | CE 1 | CE 2 | CE 3 | CE 4 | IE 1 | IE2 |
|---|---|---|---|---|---|---|---|
| In-reactor additivation | | | | | | | |
| NA1 | [mg] | - | - | - | 175 | - | - |
| NA2 | [mg] | - | - | - | - | 168 | 167 |
| AO1 | [mg] | - | - | - | - | - | 230 |
| Catalyst feed | [mg] | 24.9 | 32.5 | 32.5 | 26.0 | 31.4 | 31.3 |
| Weight ratio (NA2/catalyst) | [-] | - | - | - | - | 5.35 | 5.33 |
| Yield | [g] | 942 | 2482 | 2482 | 264 | 1840 | 1685 |

(continued)

| Sample | | CE 1 | CE 2 | CE 3 | CE 4 | IE 1 | IE2 |
|---|---|---|---|---|---|---|---|
| $C_2$ | [wt.%] | n.d. | 4.3 | 4.3 | n.d. | 5.1 | 5.3 |
| Temperature difference | [K] | 0.7 | 9.7 | 9.7 | 5.7 | 7.7 | 7.0 |
| In-extruder additivation<br>NA2<br>CaSt<br>AO2 | <br>[ppm]<br>[ppm]<br>[ppm] | <br>-<br>-<br>- | <br>-<br>500<br>1500 | <br>150<br>500<br>1500 | <br>-<br>-<br>- | <br>-<br>500<br>1500 | <br>-<br>500<br>1000 |
| NA2 (HPLC) | [ppm] | - | 0 | 125 | - | 70 | 80 |
| NA1 is the commercial product NA-11 UH (Sodium 2,2'- methylene bis-(4,6-di-tert. butylphenyl) phosphate, CAS No. 85209-91-2) of Adeka Corporation, Japan<br>NA2 is the commercial product Irgaclear XT386 (1,3,5-tris(2,2-dimethyl propanamido)benzene, CAS No. 74070-61-5) of BASF AG, Germany<br>AO1 is the commercial product Vulkanox BHT (3,5-di-tert-butyl-4-hydroxytoluene, CAS No. 128-37-0) of Lanxess AG, Germany<br>AO2 is the commercial product Irganox B 215 (1:2-blend of Irganox 1010 (Pentaerythrityl-tetrakis(3-(3',5'-di-tert.butyl-4-hydroxytoluyl)-propionate and tris (2,4-di-t-butylphenyl) phosphate) phosphite) of BASF AG, Germany<br>CaSt is the commercial product Calcium stearate SP of Faci, Italy<br>Cat is the commercial catalyst BCF20P of Borealis AG, Austria<br>$C_2$ ethylene content | | | | | | | |

As can be seen from the polymerization examples, the in-reactor addition of NA2 results in an acceptable yield reduction (~ 25%), while NA1 reduces the catalyst activity much more (~ 72%).

**2. Compounding**

The samples were then pelletized on a Prism TSE 16 extruder using PP standard conditions (summarized in Table 4).

**Table 4:** Extruder conditions

| Set Temp. [°C] | Zone 5 | Zone 4 | Zone 3 | Zone 2 | Zone 1 |
|---|---|---|---|---|---|
| | 210 | 215 | 220 | 215 | 210 |
| Torque [Nm] | 6.5 | | | | |
| Screw speed [rpm] | 250 | | | | |
| Melt pressure [bar] | 7 | | | | |
| Throughput [kg/h] | 2 | | | | |

**Table 5:** Results

| **Sample** | | **CE 2** | **CE 3** | **IE 1** | **IE2** |
|---|---|---|---|---|---|
| $T_m$ (1) | [°C] | 144 | 128 | 123 | 125 |
| $T_m$ (2) | [°C] | | 147 | 144 | 144 |
| $H_f$ (1) | [J/g] | 93.6 | 2.9 | 4.3 | 3.5 |
| $H_f$ (2) | [J/g] | | 83.6 | 84.9 | 80.8 |
| $T_c$ (1) | [°C] | 106 | 111 | 109 | 109 |
| $H_c$ (1) | [J/g] | 85.8 | 91.9 | 84.9 | 84.4 |
| Haze (1mm) | [%] | 43 | 13 | 15 | 14 |

(continued)

| **Sample** | | **CE 2** | **CE 3** | **IE 1** | **IE2** |
|---|---|---|---|---|---|
| Haze (2mm) | [%] | 84 | 34 | 36 | 33 |

## Claims

**1.** Process for the preparation of an α-nucleated polypropylene comprising the steps of

(a) adding an α-nucleating agent into a reactor system,
(b) polymerizing in said reactor system in the presence of a catalyst system propylene and optionally ethylene and/or C4 to C12 α-olefins obtaining thereby a polypropylene comprising said α-nucleating agent,
(c) discharging said polypropylene from the reactor system, and
(d) extruding said polypropylene obtaining thereby the α-nucleated polypropylene,

wherein
the α-nucleating agent is selected from the group consisting of benzene amid derivatives, sorbitol derivatives, nonitol derivatives and mixtures thereof.

**2.** Process according to claim 1, wherein the α-nucleating agent is added together with the catalyst system into the reactor system.

**3.** Process according to claim 1 or 2, wherein the catalyst system comprises a procatalyst, a cocatalyst and optionally an external donor.

**4.** Process according to claim 3, wherein α-nucleating agent prior to step (a) is mixed at least with one component of the catalyst system.

**5.** Process according to claim 3 or 4, wherein the α-nucleating agent is first mixed with the cocatalyst and subsequently with the remaining components of the catalyst system.

**6.** Process according to one of the preceding claims, wherein the α-nucleating agent is added into the reactor system in amount to obtain an α-nucleated polypropylene comprising the α-nucleating agent in an amount of below 125 ppm.

**7.** Process according to one of the preceding claims, wherein the α-nucleating agent is of formula (III)

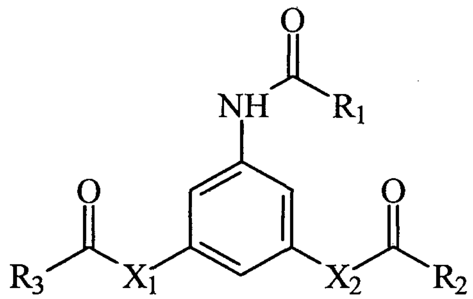

(III)

wherein

$X_1$ and $X_2$ are independently from each other a direct bond, NH or$CR_4R_5$, wherein $R_4$ and $R_5$ are independently from each other selected from the group consisting of -H, - $CH_3$, $-CH_2CH_3$, $CH(CH_3)_2$, and $-CH_2CH_2CH_3$,
$R_1$, $R_2$ and $R_3$ are independently from each other $-CH_3$, $-CH_2CH_3$, $-CH(CH_3)_2$,$-CH_2CH_2CH_3$, $-C(CH_3)_3$, and $-CH_2CH(CH_3)CH_3$.

**8.** Process according to one of the preceding claims, wherein in addition to the α-nucleating agent also a primary antioxidant is added into a reactor system, wherein the primary antioxidant is a phenol derivative not comprising

carboxylic acid ester group.

**9.** Process according to one of the preceding claims, wherein the polypropylene is a propylene homopolymer (H-PP), a random propylene copolymer (R-PP) or a heterophasic propylene copolymer.

**10.** Process according to one of the preceding claims, wherein α-nucleated polypropylene is extruded in the form of pellets.

**11.** Process according to one of the preceding claims, wherein the polypropylene in step (d) is additivated with a phosphorous based secondary antioxidant.

**12.** α-Nucleated polypropylene comprising a α-nucleating agent selected from the group consisting of benzene amid derivatives, sorbitol derivatives nonitol derivatives and mixtures thereof, wherein the amount of α-nucleating agent is in the range of 20 to below 125 ppm and the α-nucleated polypropylene has a haze of below 30 % measured on a 60x60x1 $mm^3$ sample according to ASTM D 1003-07, and wherein the α-nucleating agent is of formula (III)

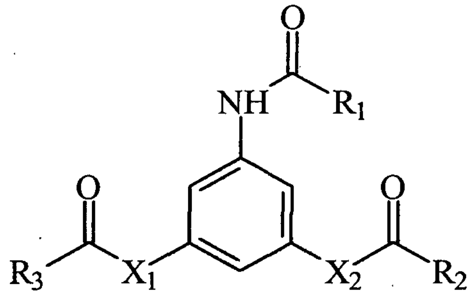

(III)

wherein

$X_1$ and $X_2$ are independently from each other NH or $CR_4R_5$, wherein $R_4$ and $R_5$ are independently from each other a direct bond or selected from the group consisting of -H, $-CH_3$, $-CH_2CH_3$, $CH(CH_3)_2$, and $-CH_2CH_2CH_3$, $R_1$, $R_2$ and $R_3$ are independently from each other $-CH_3$, $-CH_2CH_3$, $-CH(CH_3)_2$,$-CH_2CH_2CH_3$, $-C(CH_3)_3$, and $-CH_2CH(CH_3)CH_3$,
and wherein the α-nucleated polypropylene has crystallization temperature Tc in the range of 107 to 118 °C, measured by differential scanning calorimetry (DSC).

**13.** α-Nucleated polypropylene according to claim 12, wherein the α-nucleated polypropylene has
a melting temperature Tm of at least 140 °C,
measured by differential scanning calorimetry (DSC).

**14.** α-Nucleated polypropylene according to one of the preceding claims 12 to 13, wherein
the polypropylene is a propylene homopolymer (H-PP), a random propylene copolymer (R-PP) or a heterophasic propylene copolymer.

**Patentansprüche**

**1.** Verfahren zur Herstellung eines α-nukleierten Polypropylens, umfassend die Schritte von

(a) Zugeben eines α-nukleierenden Mittels in ein Reaktor-System,
(b) Polymerisieren in dem Reaktor-System in Gegenwart eines Katalysator-Systems von Propylen und gegebenenfalls Ethylen und/oder C4 bis C12 α-Olefinen unter Gewinnen dabei eines das α-nukleierende Mittel umfassenden Polypropylens,
(c) Ausgeben des Polypropylens aus dem Reaktor-System, und
(d) Extrudieren des Polypropylens unter Gewinnen dabei des α-nukleierten Polypropylens,

wobei
das α-nukleierende Mittel aus der Gruppe, bestehend aus Benzolamid-Derivaten, Sorbit-Derivaten, Nonit-Derivaten

und Gemischen davon ausgewählt ist.

2. Verfahren nach Anspruch 1, wobei das α-nukleierende Mittel zusammen mit dem Katalysator-System in das Reaktor-System gegeben wird.

3. Verfahren nach Anspruch 1 oder 2, wobei das Katalysator-System einen Prokatalysator, einen Cokatalysator und gegebenenfalls einen äußeren Donor umfasst.

4. Verfahren nach Anspruch 3, wobei das α-nukleierende Mittel vor Schritt (a) mindestens mit einer Komponente des Katalysator-Systems vermischt wird.

5. Verfahren nach Anspruch 3 oder 4, wobei das α-nukleierende Mittel zuerst mit dem Cokatalysator und anschließend mit den verbleibenden Komponenten des Katalysator-Systems vermischt wird.

6. Verfahren nach einem der vorangehenden Ansprüche, wobei das α-nukleierende Mittel in das Reaktor-System in einer Menge gegeben wird, um ein α-nukleiertes Polypropylen zu erhalten, umfassend das α-nukleierende Mittel in einer Menge von unter 125 ppm.

7. Verfahren nach einem der vorangehenden Ansprüche, wobei das α-nukleierende Mittel die Formel (III) aufweist

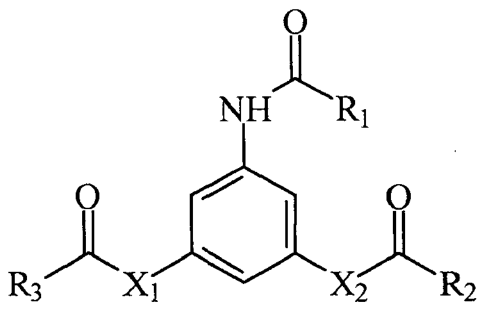

(III)

worin

$X_1$ und $X_2$ unabhängig voneinander eine direkte Bindung, NH oder $CR_4R_5$ darstellen, wobei $R_4$ und $R_5$ unabhängig voneinander ausgewählt sind aus der Gruppe, bestehend aus -H, $-CH_3$, $-CH_2CH_3$, $CH(CH_3)_2$ und $-CH_2CH_2CH_3$,
$R_1$, $R_2$ und $R_3$ unabhängig voneinander $-CH_3$, $-CH_2CH_3$, $-CH(CH_3)_2$, $-CH_2CH_2CH_3$, $-C(CH_3)_3$ und $-CH_2CH(CH_3)CH_3$ darstellen.

8. Verfahren nach einem der vorangehenden Ansprüche, wobei zusätzlich zu dem α-nukleierenden Mittel auch ein primäres Antioxidans in ein Reaktor-System gegeben wird, wobei das primäre Antioxidans ein Phenol-Derivat darstellt, das keine Carbonsäureester-Gruppe umfasst.

9. Verfahren nach einem der vorangehenden Ansprüche, wobei das Polypropylen ein Propylen-Homopolymer (H-PP), ein statistisches Propylen-Copolymer (R-PP) oder ein heterophasisches Propylen-Copolymer ist.

10. Verfahren nach einem der vorangehenden Ansprüche, wobei α-nukleiertes Polypropylen in Form von Pellets extrudiert wird.

11. Verfahren nach einem der vorangehenden Ansprüche, wobei das Polypropylen in Schritt (d) mit einem Phosphor basier-ten sekundären Antioxidans additiviert wird.

12. α-Nukleiertes Polypropylen, umfassend ein α-nukleierendes Mittel, ausgewählt aus der Gruppe, bestehend aus Ben-zolamid-Derivaten, Sorbit-Derivaten, Nonit-Derivaten und Gemischen davon, wobei die Menge an α-nukleierendem Mittel in dem Bereich von 20 bis unter 125 ppm liegt und das α-nukleierte Polypropylen einen Haze-Wert von unter 30 %, gemessen an einer 60x60x1 $mm^3$ Probe gemäß ASTM D 1003-07, aufweist und wobei das α-nukleierende Mittel die Formel (III) aufweist

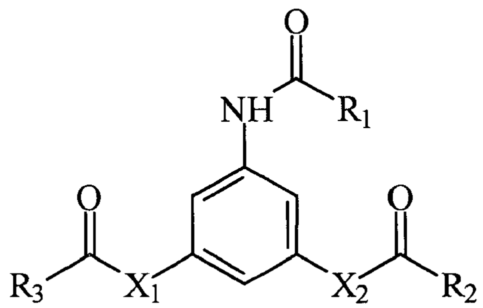

(III)

worin

$X_1$ und $X_2$ unabhängig voneinander NH oder $CR_4R_5$ darstellen, wobei $R_4$ und $R_5$ unabhängig voneinander eine direkte Bindung darstellen oder ausgewählt sind aus der Gruppe, be-stehend aus -H, $-CH_3$, $-CH_2CH_3$, $CH(CH_3)_2$ und $-CH_2CH_2CH_3$,
$R_1$, $R_2$ und $R_3$ unabhängig voneinander $-CH_3$, $-CH_2CH_3$, $-CH(CH_3)_2$, $-CH_2CH_2CH_3$, $-C(CH_3)_3$ und $-CH_2CH(CH_3)CH_3$ darstellen, und wobei das α-nukleierte Polypropylen eine Kristallisa-tions-Temperatur Tc in dem Bereich von 107 bis 118°C, ge-messen durch Dynamische Differenzkalorimetrie (DSC), aufweist.

**13.** α-Nukleiertes Polypropylen nach Anspruch 12, wobei das α-nukleierte Polypropylen eine Schmelz-Temperatur Tm von mindestens 140°C, gemessen durch Dynamische Differenzkalorimetrie (DSC), aufweist.

**14.** α-Nukleiertes Polypropylen nach einem der vorangehenden Ansprüche 12 bis 13, wobei das Polypropylen ein Propylen-Homopolymer (H-PP), ein statistisches Propylen-Copolymer (R-PP) oder ein heterophasisches Propylen-Copolymer ist.

## Revendications

**1.** Procédé pour la préparation d'un polypropylène α-nucléé, comprenant les étapes suivantes :

(a) addition d'un agent d'α-nucléation dans un système de réacteur,
(b) polymérisation dans ledit système de réacteur, en présence d'un système catalyseur, de propylène et éventuellement d'éthylène et/ou d'α-oléfines en $C_4$ à $C_{12}$, ce qui donne ainsi un polypropylène comprenant ledit agent d'α-nucléation,
(c) décharge dudit polypropylène hors du système de réacteur, et
(d) extrusion dudit polypropylène, ce qui donne ainsi le polypropylène α-nucléé,

dans lequel l'agent d'α-nucléation est choisi dans l'ensemble constitué par les dérivés de benzène-amide, les dérivés de sorbitol, les dérivés de nonitol, et leurs mélanges.

**2.** Procédé selon la revendication 1, dans lequel l'agent d'α-nucléation est ajouté conjointement avec le système catalyseur dans le système de réacteur.

**3.** Procédé selon la revendication 1 ou 2, dans lequel le système catalyseur comprend un procatalyseur, un cocatalyseur et éventuellement un donneur externe.

**4.** Procédé selon la revendication 3, dans lequel l'agent d'α-nucléation avant l'étape (a) est mélangé au moins avec un composant du système catalyseur.

**5.** Procédé selon la revendication 3 ou 4, dans lequel l'agent d'α-nucléation est d'abord mélangé avec le cocatalyseur et ensuite avec les composants restants du système catalyseur.

**6.** Procédé selon l'une des revendications précédentes, dans lequel l'agent d'α-nucléation est ajouté dans le système de réacteur en une quantité telle que soit obtenu un polypropylène α-nucléé comprenant l'agent d'α-nucléation en une quantité inférieure à 125 ppm.

7. Procédé selon l'une des revendications précédentes, dans lequel l'agent d'$\alpha$-nucléation est de formule (III)

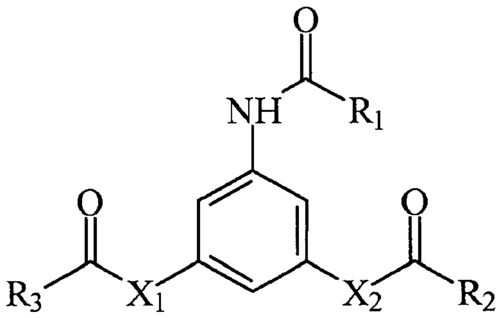

(III)

dans laquelle

$X_1$ et $X_2$, indépendamment l'un de l'autre, sont une liaison directe, NH ou $CR_4R_5$, où $R_4$ et $R_5$, indépendamment l'un de l'autre, sont choisis dans l'ensemble constitué par -H, $-CH_3$, $-CH_2CH_3$, $CH(CH_3)_2$, et $-CH_2CH_2CH_3$, $R_1$, $R_2$ et $R_3$, indépendamment les uns des autres, sont $-CH_3$, $-CH_2CH_3$, $-CH(CH_3)_2$, $-CH_2CH_2CH_3$, $-C(CH_3)_3$, et $-CH_2CH(CH_3)CH_3$.

8. Procédé selon l'une des revendications précédentes, dans lequel, en plus de l'agent d'$\alpha$-nucléation, également un antioxydant primaire est ajouté dans le système de réacteur, et dans lequel l'antioxydant primaire est un dérivé phénolique ne comprenant pas de groupe ester d'acide carboxylique.

9. Procédé selon l'une des revendications précédentes, dans lequel le polypropylène est un homopolymère de propylène (H-PP), un copolymère de propylène statistique (R-PP) ou un copolymère de propylène hétérophasique.

10. Procédé selon l'une des revendications précédentes, dans lequel le polypropylène $\alpha$-nucléé est extrudé sous la forme de pastilles.

11. Procédé selon l'une des revendications précédentes, dans lequel le polypropylène dans l'étape (d) est additivé avec un antioxydant secondaire à base de phosphore.

12. Polypropylène $\alpha$-nucléé comprenant un agent d'$\alpha$-nucléation choisi dans l'ensemble constitué par les dérivés de benzène-amide, les dérivés de sorbitol, les dérivés de nonitol, et leurs mélanges, dans lequel la quantité d'agent d'$\alpha$-nucléation est située dans la plage allant de 20 à moins de 125 ppm, lequel polypropylène $\alpha$-nucléé présente une valeur Haze, mesuré sur un échantillon de 60 x 60 x 1 $mm^3$ conformément à la norme ASTM D 1003-07, inférieur à 30 %, et dans lequel l'agent d'$\alpha$-nucléation est de formule (III)

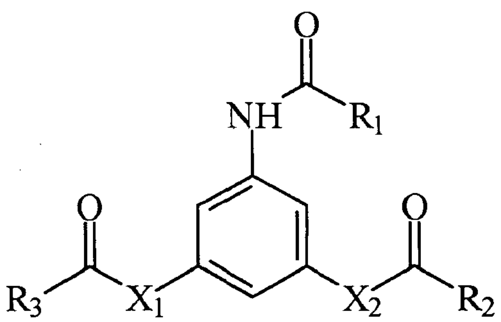

(III)

dans laquelle

$X_1$ et $X_2$, indépendamment l'un de l'autre, sont NH ou $CR_4R_5$, où $R_4$ et $R_5$, indépendamment l'un de l'autre, sont une liaison directe ou sont choisis dans l'ensemble constitué par -H, $-CH_3$, $-CH_2CH_3$, $CH(CH_3)_2$, et $-CH_2CH_2CH_3$,
$R_1$, $R_2$ et $R_3$, indépendamment les uns des autres, sont $-CH_3$, $-CH_2CH_3$, $-CH(CH_3)_2$, $-CH_2CH_2CH_3$, $-C(CH_3)_3$,

et $-CH_2CH(CH_3)CH_3$, et lequel polypropylène α-nucléé possède un point de cristallisation Tc, mesuré par calorimétrie à balayage différentiel (DSC), situé dans la plage allant de 107 à 118°C.

**13.** Polypropylène α-nucléé selon la revendication 12, lequel polypropylène α-nucléé possède un point de fusion Tm, mesuré par calorimétrie à balayage différentiel (DSC), d'au moins 140°C.

**14.** Polypropylène α-nucléé selon l'une des revendications 12 et 13, dans lequel le polypropylène est un homopolymère de propylène (H-PP), un copolymère de propylène statistique (R-PP) ou un copolymère de propylène hétérophasique.

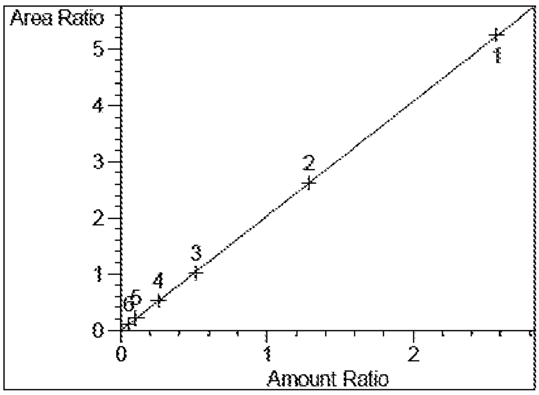


Irgaclear XT 386 at exp. RT: 6.181
DAD1 D, Sig=225,4 Ref=450,80
Correlation: 0.99997
Residual Std. Dev.: 0.01581
Formula: y = mx + b
m: 2.04168
b: -4.67760e-3
x: Amount
y: Area

Figure 1: Regression plot of levels 1 to 6 of Irgaclear XT 386 and Tinuvin 120 (ISTD); included origin

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2202271 A
- WO 8707620 A
- WO 9219653 A
- WO 9219658 A
- EP 0491566 A
- WO 9924479 A
- EP 0887379 A
- WO 9212182 A
- WO 2004000899 A
- WO 2004111095 A
- WO 9924478 A
- WO 0068315 A


### Non-patent literature cited in the description


- **ABRAHAM et al.** *Macromol.Chem.Phys.,* 2010, vol. 211, 171-181
- *CHEMICAL ABSTRACTS,* 745070-61-5
- **GAHLEITNER et al.** *Intern.Polym.Proc.,* 2011, vol. XXVI, 2-20
- *CHEMICAL ABSTRACTS,* 882073-43-0
- Plastics Additives Handbook. Hanser, 2001, 9-15
- *CHEMICAL ABSTRACTS,* 128-37-0
- *CHEMICAL ABSTRACTS,* 35958-30-6
- *CHEMICAL ABSTRACTS,* 2074-35-5
- IR-Spektroskopie für Anwender. WILEY-VCH, 1997
- Validierung in der Analytik. WILEY-VCH, 1997
- *CHEMICAL ABSTRACTS,* 85209-91-2
- *CHEMICAL ABSTRACTS,* 74070-61-5